# EUROPEAN PATENT APPLICATION

(11) **EP 3 483 748 A1**
(43) Date of publication of application: **15.05.2019**
(21) Application number: 17201529.9
(22) Date of filing: 14.11.2017
(51) Int. Cl.: G06F 17/30

(54) **ASSISTANT BOT FOR CONTROLLING A DOMAIN SPECIFIC TARGET SYSTEM**

(71) Applicant: Atos Information Technology GmbH, 81739 München (DE)
(72) Inventor: Thronicke, Wolfgang, 33154 Salzkotten (DE); Brandt, Lukas, 33106 Paderborn (DE)
(74) Representative: Patentanwaltskanzlei WILHELM & BECK

(57) **Abstract**

An assistant bot for controlling a domain specific target system, comprises a conversational engine connectable to a user exchange unit, a text analysis component connected to the conversational engine, a domain knowledge database connected to the text analysis component and a logic module connected to the conversational engine. The logic module comprises a user-personalized knowledge store and a dialog module with a description of domain specific requirements to trigger the domain specific target system. The conversational engine receives a dialog structure from the logic module including a questionnaire based on the domain specific requirements, performs a dialog with the user according to the dialog structure and forwards a user's response to the text analysis component which performs an interpretation of the user's response. The domain knowledge database validates the interpreted data. The text analysis component transmits the validated data to the conversational engine which forwards a current dialog state based on the validated data to the logic module and requests a decision strategy for a further dialog structure. The logic module identifies achieved domain specific requirements and modifies the questionnaire accordingly. The conversational engine continues to generate dialogues until sufficient domain specific requirements are achieved. The logic module will trigger the domain specific target system if sufficient domain specific requirements are achieved.

## Description

The present invention relates to an assistant bot for controlling a domain specific target system.

Assistant bots are helpful for people who are not used to services like e.g. apps which require high abstraction of the operation and a lot of training. From the state of art, command-driven assistant bots for an interaction with a user are known. However, those assistant bots are not goal-driven yet as they are not capable of recognizing the user's intent.

For example, treatment and supervision of a patient in the medical domain requires to collect specific input from the user during an interaction. Apart from that, controlling of systems for the production of individual products also requires a recognition of domain specific properties of the products.

The objective of the invention is to provide an improved assistant bot for controlling a domain specific target system. This objective is solved by an assistant bot for controlling a domain specific target system with the features of claim 1. Further embodiments are specified in the dependent claims.

An assistant bot for controlling a domain specific target system, comprises a conversational engine connectable to a user exchange unit, a text analysis component connected to the conversational engine, a domain knowledge database connected to the text analysis component and a logic module connected to the conversational engine. The logic module comprises a user-personalized knowledge store and a dialog module comprising a description of domain specific requirements to trigger the domain specific target system. The conversational engine is designed to receive a dialog structure from the logic module including a questionnaire based on the domain specific requirements and the user-personalized knowledge when the user starts a session. The conversational engine is designed to perform a dialog with the user via the user exchange unit according to the dialog structure. The conversational engine is designed to forward a user's response to the text analysis component. The text analysis component is designed to perform an interpretation of the user's response. The domain knowledge database is designed to validate the interpretation. The text analysis component is designed to transmit validated data to the conversational engine. The conversational engine is designed to forward a current dialog state based on the validated data to the logic module and to request a decision strategy for a further dialog structure including a modified questionnaire based on the domain specific requirements and the user-personalized knowledge. The logic module is designed to identify achieved domain specific requirements and to modify the questionnaire according to the identified domain specific requirements. The conversational engine is designed to receive the further dialog structure from the logic module. The conversational engine is designed to perform a further dialog with the user according to the further dialog structure. The conversational engine is designed to continue a generation of dialogues until sufficient domain specific requirements are achieved or the user closes the session. The logic module is designed to trigger the domain specific target system if sufficient domain specific requirements are achieved.

Advantageously, the assistant bot is goal-driven. This means that the assistant bot is capable of recognizing the user's intent during a session rather than just executing commands from the user. The assistant bot e.g. is capable of creating new domain specific requirements based on the dialogues with the user and adapting the questionnaire accordingly to achieve the domain specific requirements and to trigger the domain specific target system.

In an embodiment, the text analysis component comprises at least two recognizers specialized on different domains. Advantageously, the text analysis component can recognize a domain specific content of the user's response.

In an embodiment, a first recognizer is designed to use domain specific training data, a language model and at least one software-library to extract and categorize entities from the user's response. Advantageously, the text analysis component thus can recognize a user's intent.

In an embodiment, a second recognizer is designed to use training data and a further software-library for recognition of numeric entities. Advantageously, the text analysis component thus can recognize numeric entities.

In an embodiment, the domain knowledge database contains a knowledge-graph of the conversation relevant and domain specific facts. Advantageously, such a domain knowledge database can validate the interpretation by the text analysis component. The domain knowledge database can also be called an ontology.

In an embodiment, the user-personalized knowledge store contains information about previous sessions. Advantageously, the assistant bot thus is capable of remembering previous sessions.

In an embodiment, the conversational engine and the logic module are connected to each other by an interface.

In an embodiment, the logic module is capable of generating micro-services. Advantageously, the micro-services can be processed or transmitted separately.

In an embodiment, the logic module is connectable to external decision support systems. Advantageously, this can optimize the dialog structure transmitted to the conversational engine. The external decision support systems can be further domain knowledge databases and/or expert systems. Advantageously, expert systems are capable of emulating a human decision-making ability.

In an embodiment, the assistant bot comprises a reporting module connected to the logic module. The reporting module is designed to store achieved requirements in an external database. The reporting module is designed to receive information about previous sessions from the logic module. The reporting module is designed to generate a report. Advantageously, the user can analyse previous sessions by using the report generated by the reporting module.

The above-described properties, features and advantages of this invention and the way in which they are achieved will become clearer and more clearly understood in association with the following description of the exemplary embodiments explained in greater detail in association with the drawings. Here, in each case in schematic illustration:
Fig. 1: shows an assistant bot for controlling a domain specific target system;
Fig. 2: shows a diagram illustrating interactions and data flow between components of the assistant bot and external components.

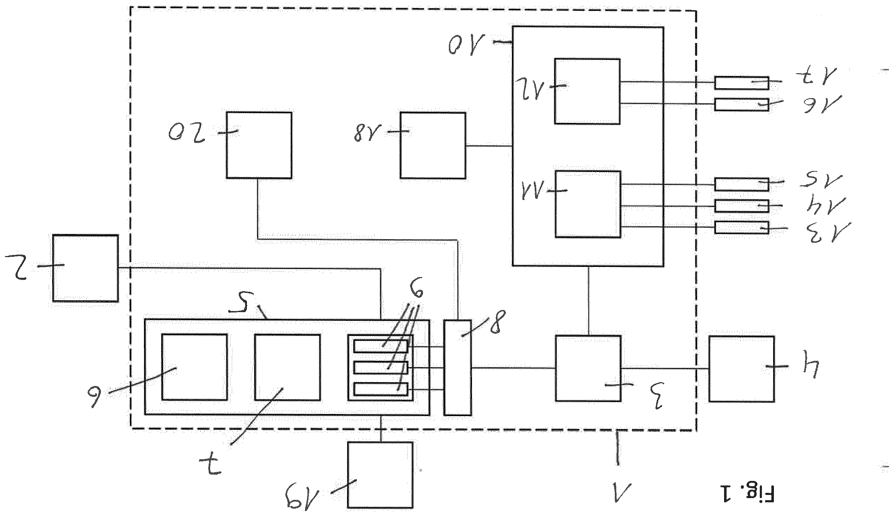

**Fig. 1** shows a scheme of an assistant bot 1 for controlling a domain specific target system 2. The domain specific target system 2 can e.g. be an equipment for manufacturing an individual domain specific product. In order to trigger the domain specific target system 2, e.g. by starting the production of the individual domain specific product, a user can start a session and communicate with the assistant bot 1. The assistant bot 1 performs an inquiry during the session and is capable of recognizing the user's intent. To trigger the domain specific target system 2, certain domain specific requirements have to be achieved. The domain specific requirements can also be called goals. The domain specific requirements can e.g. be properties of the individual product. In this case, the domain specific requirements are achieved, if the user expresses desired properties of the individual product during the session. The assistant bot 1 e.g. can also perform a dialog with a medical patient. In this case the target system 2 can e.g. cause the intervention of a medical staff member.

The assistant bot 1 comprises a conversational engine 3. The conversational engine 3 is connected to a user exchange unit 4. The user exchange unit 4 can e.g. be a web interface, e.g. a browser, or a chat renderer allowing for text-based conversation and/or a speech renderer supporting speech recognition and generation for verbal communication with the user. The conversational engine 3 and the user exchange unit 4 communicate with each other via a computer communication protocol. E.g. the conversational engine 3 and the user exchange unit 4 can be connected with each other by a web-socket. The web-socket is a TCP (Transmission Control Protocol) based communication protocol allowing to establish a bidirectional connection between the conversational engine 3 and the user exchange unit 4. However, the conversational engine 3 and the user exchange unit 4 do not have to comprise a bidirectional connection necessarily and also can communicate via a HTTP based protocol or any other type of a computer communication protocol.

The conversational engine 3 is connected to a logic module 5. The logic module 5 can e.g. be an Arango database. The logic module 5 is connected to the target system 2 and is able to trigger the target system. The logic module 5 comprises a user-personalized knowledge store 6 and a dialog module 7. The user-personalized knowledge 6 store contains information about the user. The user-personalized knowledge store 6 can also contain information about previous sessions of the user. The dialog module 7 comprises a graph-like description of the domain specific requirements to trigger the domain specific target system 2. A graph is an abstract structure, which describes relations of domain specific objects which also can be called vertices. The relations are described by lines connecting the vertices, wherein the lines can also be called edges.

The conversational engine 3 and the logic module 5 are connected to each other by an interface 8. The interface 8 can e.g. be a REST interface 8. REST (Representational State Transfer) is an architectural paradigm fulfilling certain properties. The main property which has to be fulfilled is a unitary interface 8 which is the REST interface 8.

In order to exchange data between the conversational engine 3 and the logic module 5, the logic module 5 generates micro-services 9. Micro-services 9 are independent or loosely coupled services which are provided in order to be processed separately. If the conversational engine 3 and the logic module 5 are connected by a REST interface 8, the micro-services 9 are REST micro-services 9.

The conversational engine 3 is connected to a text analysis component 10. The text analysis component 10 is capable of performing an interpretation of a user's response. The text analysis component 10 comprises at least two recognizers 11,12 specialized on different domains for interpretation. A first recognizer 11 uses domain specific training data 13, e.g. containing domain specific sentence patterns, a language model 14 and at least one software-library 15 to extract and categorize entities from the user's response. The software-library 15 can e.g. be a Rasa NLU library or a SpaCy library. A second recognizer 12 uses training data 16 and a further software-library 17, e.g. for recognition of numeric entities like dates, times or other numeric entities. For recognition of numeric entities e.g. the Duckling library can be used.

A domain knowledge database 18 is connected to the text analysis component 10. The domain knowledge database 18 contains a knowledge-graph of the conversation relevant and domain specific facts. The domain knowledge database 18 can also be called ontology. The domain knowledge database 18 is capable of validating interpreted data from the interpretation performed by the text analysis component 10.

The logic module 5 is connected to external decision support systems 19. The external decision support systems 19 can e.g. be further domain knowledge databases (ontologies) and/or expert systems, wherein the expert systems are designed to emulate a human decision-making ability. The external support systems 19 can also be omitted.

Apart from that, the assistant bot 1 comprises a reporting module 20 connected to the logic module 5 for storing achieved requirements in an external database. The reporting module 20 is also intended for generating a report about previous sessions. Therefor, the reporting module 20 is designed to receive information about previous sessions from the logic module 5.

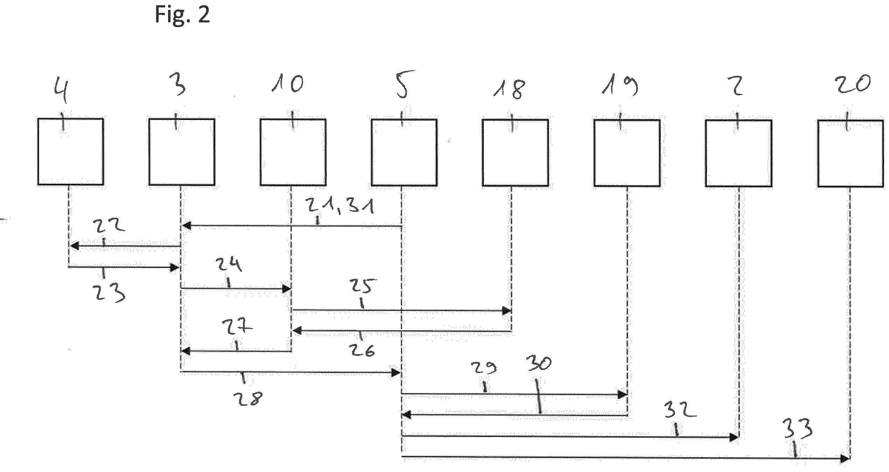

**Fig. 2** shows a schematic diagram illustrating interactions and data flow between components of the assistant bot 1 and external components. The external components are the user exchange unit 4, the domain specific target system 2 and the external decision support systems 19.

The data flow is described by steps indicated by arrows. Apart from the lowest two steps shown in Fig. 2, the steps are performed chronologically beginning with a first step 21 when the user starts the session. The data flow can be cyclic. Thus an eleventh step 31 is indicated by the same arrow as the first step 1.

In the first step 21, the conversational engine 3 receives a dialog structure from the logic module 5 including a questionnaire based on the domain specific requirements and the user-personalized knowledge when the user starts the session. Therefore, the logic module 5 transmits the dialog structure to the interface, wherein the interface transmits the dialog structure to the conversational engine 3. The dialog structure is transmitted to the interface in the form of micro-services. E.g. the dialog structure can comprise dialog substructures which can be transmitted separately.

The conversational engine 3 performs a dialog with the user by transmitting messages according to the dialog structure in a second step 22 to the user exchange unit 4 and receiving the user's response via the user exchange unit 4 in a third step 23.

In a fourth step 24, the conversational engine 3 forwards the user's response to the text analysis component 10. The text analysis component 10 performs an interpretation of the user's response.

The text analysis component 10 transmits a request to the domain knowledge database 18 in a fifth step 25 to validate the interpretation. The domain knowledge database 18 validates the interpretation e.g. by categorizing domain specific entities of the user's response. The domain knowledge database 18 transmits a validation feedback to the text analysis component 10 in a sixth step 26.

In a seventh step 27, the text analysis component 10 transmits the validated data to the conversational engine 3. In an eighth step 28, the conversational engine 3 forwards a current dialog state based on the interpreted and validated data to the logic module 5 via the interface and requests a decision strategy for a further dialog structure including a modified questionnaire based on the domain specific requirements and the user-personalized knowledge. The logic module 5 identifies achieved domain specific requirements and modifies the questionnaire according to the identified domain specific requirements.

In a ninth step 29, the logic module 5 transmits a decision support requests to an external decision support system 19 and receives a decision support feedback from the external decision support system 19 in a tenth step 30 to generate the further dialog structure.

The conversational engine 3 receives the further dialog structure from the logic module 5 via the interface in an eleventh step 31 and performs a further dialog with the user according to the further dialog structure. The conversational engine 3 continues to generate dialogues until sufficient domain specific requirements are achieved or the user closes the session.

The logic module 5 can trigger the domain specific target system 2 if sufficient domain specific requirements are achieved. Therefor, the logic module 5 transmits micro-services to the target system 2 in a twelfth step 32. The target system 2 e.g. starts the production of the individual product based on the user's intent recognized by the assistant bot 1.

The logic module 5 can transmit information about previous sessions to the reporting module 20 in a thirteenth step 33.

The invention has been illustrated and described in more specific detail on the basis of the preferred exemplary embodiments. Nevertheless, the invention is not restricted to the examples disclosed. Rather, other variations can be derived therefrom by the person skilled in the art, without departing from the scope of protection of the invention.

### REFERENCE LIST

- 1: assistant bot
- 2: domain specific target system
- 3: conversational engine
- 4: user exchange unit
- 5: logic module
- 6: user-personalized knowledge
- 7: dialog module
- 8: interface
- 9: micro-services
- 10: text analysis component
- 11: first recognizer
- 12: second recognizer
- 13: domain specific training data
- 14: language model
- 15: software-library
- 16: training data
- 17: further software-library
- 18: domain knowledge database
- 19: external decision support systems
- 20: reporting module
- 21: first step
- 22: second step
- 23: third step
- 24: fourth step
- 25: fifth step
- 26: sixth step
- 27: seventh step
- 28: eighth step
- 29: ninth step
- 30: tenth step
- 31: eleventh step
- 32: twelfth step
- 33: thirteenth step

## Claims

1. An assistant bot (1) for controlling a domain specific target system (2),
comprising a conversational engine (3) connectable to a user exchange unit (4),
a text analysis component (10) connected to the conversational engine (3),
a domain knowledge database (18) connected to the text analysis component (10) and
a logic module (5) connected to the conversational engine (3),
wherein the logic module (5) comprises an user-personalized knowledge store (6) and a dialog module (7) comprising a description of domain specific requirements to trigger the domain specific target system (2),
wherein the conversational engine (3) is designed to receive a dialog structure from the logic module (5) including a questionnaire based on the domain specific requirements and the user-personalized knowledge when the user starts a session,
wherein the conversational engine (3) is designed to perform a dialog with the user via the user exchange (4) unit according to the dialog structure,
wherein the conversational engine (3) is designed to forward a user's response to the text analysis component (10), wherein the text analysis component (10) is designed to perform an interpretation of the user's response,
wherein the domain knowledge database (18) is designed to validate the interpretation,
wherein the text analysis component (10) is designed to transmit validated data to the conversational engine (3), wherein the conversational engine (3) is designed to forward a current dialog state based on the validated data to the logic module (5) and to request a decision strategy for a further dialog structure including a modified questionnaire based on the domain specific requirements and the user-personalized knowledge,
wherein the logic module (5) is designed to identify achieved domain specific requirements and to modify the questionnaire according to the identified domain specific requirements,
wherein the conversational engine (3) is designed to receive the further dialog structure from the logic module (5),
wherein the conversational engine (3) is designed to perform a further dialog with the user according to the further dialog structure,
wherein the conversational engine (3) is designed to continue a generation of dialogues until sufficient domain specific requirements are achieved or the user closes the session,
wherein the logic module (5) is designed to trigger the domain specific target system (2) if sufficient domain specific requirements are achieved.

2. The assistant bot (1) as claimed in claim 1,
wherein the text analysis component (10) comprises at least two recognizers (11,12) specialized on different domains.

3. The assistant bot (1) as claimed in claim 2,
wherein a first recognizer (11) is designed to use domain specific training data (13), a language model (14) and at least one software-library (15) to extract and categorize entities from the user's response.

4. The assistant bot (1) as claimed in claims 2 or 3,
wherein a second recognizer (12) is designed to use training data (16) and a further software-library (17) for recognition of numeric entities.

5. The assistant bot (1) as claimed in one of the previous claims,
wherein the domain knowledge database (18) contains a knowledge-graph of the conversation relevant and domain specific facts.

6. The assistant bot (1) as claimed in one of the previous claims,
wherein the user-personalized knowledge store (6) contains information about previous sessions.

7. The assistant bot (1) as claimed in one of the previous claims,
wherein the conversational engine (3) and the logic module (5) are connected to each other by an interface (8).

8. The assistant bot (1) as claimed in one of the previous claims,
wherein the logic module (5) is capable of generating micro-services (9).

9. The assistant bot (1) as claimed in one of the previous claims,
wherein the logic module (5) is connectable to external decision support systems (19).

10. The assistant bot (1) as claimed in one of the previous claims,
comprising a reporting module (20) connected to the logic module (5),
wherein a reporting module (20) is designed to store achieved requirements in an external database,
wherein the reporting module (20) is designed to receive information about previous sessions from the logic module (5)
wherein the reporting module (20) is designed to generate a report.
